# EUROPEAN PATENT APPLICATION

(11) **EP 4 832 213 A1**
(43) Date of publication of application: **28.10.2026**
(21) Application number: 25901660.8
(22) Date of filing: 17.09.2025
(51) Int. Cl.: H01M 50/30, H01M 50/289, H01M 50/271, H01M 50/249

(54) **BATTERY PACK**

(30) Priority: 04.12.2024 KR 20240178732
(71) Applicant: LG Energy Solution, Ltd., Seoul 07335 (KR)
(72) Inventor: JEONG, Dong-Ik, Daejeon 34122 (KR); PARK, Ju-Hun, Daejeon 34122 (KR); KO, Hyung-Ho, Daejeon 34122 (KR); KIM, Soo-Youl, Daejeon 34122 (KR)
(74) Representative: Plasseraud IP
(86) International application number: PCT/KR2025/014477
(87) International publication number: WO 2026/121495

(57) **Abstract**

Disclosed is a battery pack, which includes a case including a base plate and a side wall installed on the base plate; a battery module located inside the case and including a rear end cover having a venting hole facing the side wall; and a partition wall located inside the case and having a passing hole facing a gap between the rear end cover and the side wall.

## Description

### TECHNICAL FIELD

The present disclosure relates to a battery pack.

The present application claims priority to Korean Patent Application No. 10-2024-0178732 filed on December 4, 2024, in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

The present disclosure is designed to solve the problems of the related art, and therefore the present disclosure is directed to providing a battery pack with an improved structure so that the emission of flame and the like generated inside a battery module may be appropriately controlled, and a vehicle including the same.

In addition, the present disclosure is directed to providing a structure that may prevent damage to the outer appearance of the battery pack when a thermal event occurs.

In addition, the present disclosure is directed to providing flame or ignitable particles from being emitted to the outside of the battery pack when a thermal event occurs.

In addition, the present disclosure is directed to providing a structure capable of suppressing heat propagation between battery cells or battery modules.

In addition, the present disclosure is directed to providing a structure capable of rapidly diffusing or dispersing high-temperature particles emitted when a thermal event occurs.

In addition, the present disclosure is directed to providing a structure capable of rapidly diffusing or dispersing high-temperature venting gas emitted when a thermal event occurs.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case including a base plate and a side wall installed on the base plate; a battery module located inside the case and including a rear end cover having a venting hole facing the side wall; and a partition wall located inside the case and having a passing hole facing a gap between the rear end cover and the side wall.

In addition, the partition wall may include a main wall installed on the base plate and configured to cover one surface of the battery module; and a flow guide extending between the rear end cover and the side wall from the main wall.

In addition, the flow guide may be disposed above the passing hole.

In addition, the flow guide may connect the side wall and the main wall at an angle.

In addition, the flow guide may connect the side wall and the main wall with a curved surface.

In addition, the flow guide may cover a part of the rear end cover.

In addition, the battery pack may further comprise a fastening member configured to fasten the flow guide and the side wall.

In addition, the passing hole may be open downward.

In addition, the passing hole may be open rearward.

In addition, the passing hole may expose the side wall or the base plate.

In addition, the battery module may further include a power terminal protruding forward.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, damage to the outer appearance of the battery pack may be prevented even if a thermal event occurs.

According to at least one of the embodiments of the present disclosure, the electrical safety of the battery pack may be improved.

According to at least one of the embodiments of the present disclosure, heat propagation between battery modules may be suppressed when a thermal event occurs.

According to at least one of the embodiments of the present disclosure, high temperature particles emitted when a thermal event occurs may be rapidly diffused or dispersed.

According to at least one of the embodiments of the present disclosure, high temperature venting gas discharged when a thermal event occurs may be rapidly diffused or dispersed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery pack according to an embodiment of the present disclosure.
FIG. 2 is an exploded view showing some components of the battery pack of FIG. 1.
FIG. 3 is an exploded view showing some components of the battery pack of FIG. 2.
FIG. 4 is a drawing showing the battery module of FIG. 3.
FIG. 5 is a drawing showing some components of the battery module of FIG. 4.
FIG. 6 is a drawing showing some components of the battery module of FIG. 5, viewed in a different direction.
FIG. 7 is a drawing showing the battery module of FIG. 4, viewed in a different direction.
FIG. 8 is a drawing showing the first partition wall of FIG. 3.
FIG. 9 is a drawing showing some components of the battery pack of FIG. 2.
FIG. 10 is a cross-sectional view taken along the line A-A' of FIG. 1.
FIG. 11 is a cross-sectional view taken along the line B-B' of FIG. 1.
FIG. 12 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

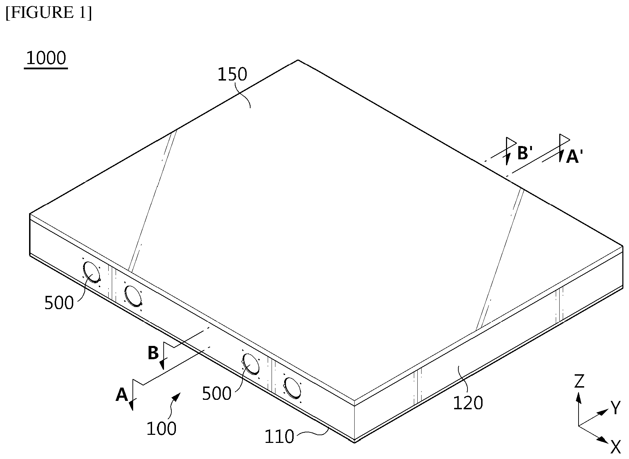

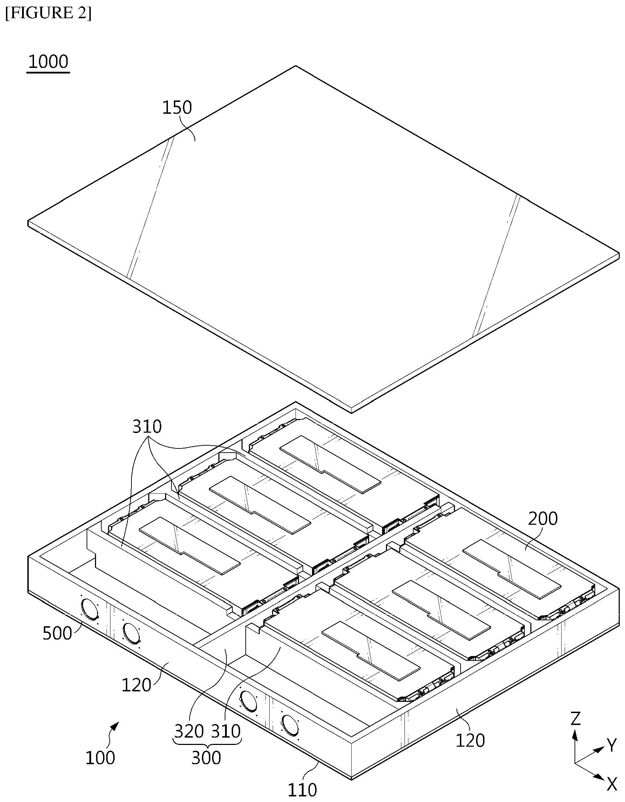

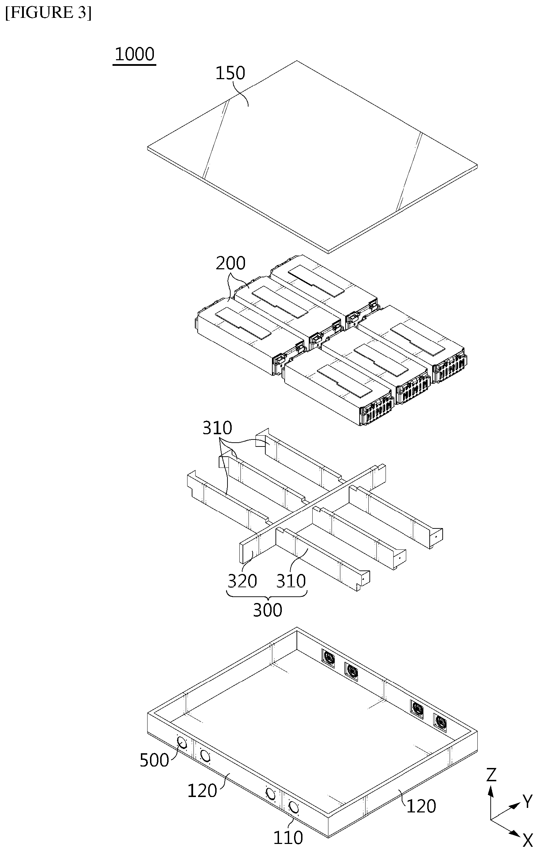

FIG. 1 is a drawing showing a battery pack 1000 according to an embodiment of the present disclosure. FIG. 2 is an exploded view showing some components of the battery pack 1000 of FIG. 1. FIG. 3 is an exploded view showing some components of the battery pack 1000 of FIG. 2.

Referring to FIGS. 1 to 3, the case 100 may provide a space therein. The case 100 may include a base plate 110. The base plate 110 may have a square shape. The base plate 110 may have a flat plate shape. The base plate 110 may form the outer appearance of the battery pack 1000. The base plate 110 may provide an inner space of the battery pack 1000.

The case 100 may include a side wall 120. The side wall 120 may be installed, fastened, fixed, coupled, or attached to the upper surface of the base plate 110. The side wall 120 may be provided along the perimeter of the base plate 110. For example, four side walls 120 may be provided. The side wall 120 may provide an inner space of the battery pack 1000.

The case 100 may include a pack cover 150. The pack cover 150 may have a square plate shape. The pack cover 150 may have a flat plate shape. The pack cover 150 may form the outer appearance of the battery pack 1000. The pack cover 150 may cover the inner space of the battery pack 1000. The pack cover 150 may be installed, fastened, fixed, coupled, or attached to the side wall 120.

The battery pack 1000 may include a partition wall 300. The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the inner space of the battery pack 1000.

The first partition wall 310 may extend along the front and rear direction or the X-axis direction. The first partition wall 310 may be provided in plurality. The plurality of first partition walls 310 may be arranged along the right and left direction or the Y-axis direction.

The second partition wall 320 may extend along the right and left direction or the Y-axis direction. A plurality of first partition walls 310 may be arranged at each side of the second partition wall 320.

The battery module 200 may be disposed inside the case 100. The battery module 200 may be installed, fastened, fixed, coupled, or attached to the upper surface of the base plate 110. The battery module 200 may be provided in plurality. For example, eight battery modules 200 may be provided. The battery module 200 may be located in the space partitioned by the partition wall 300.

The venting device 500 may be installed on the side wall 120. For example, the venting device 500 may be installed on the left side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

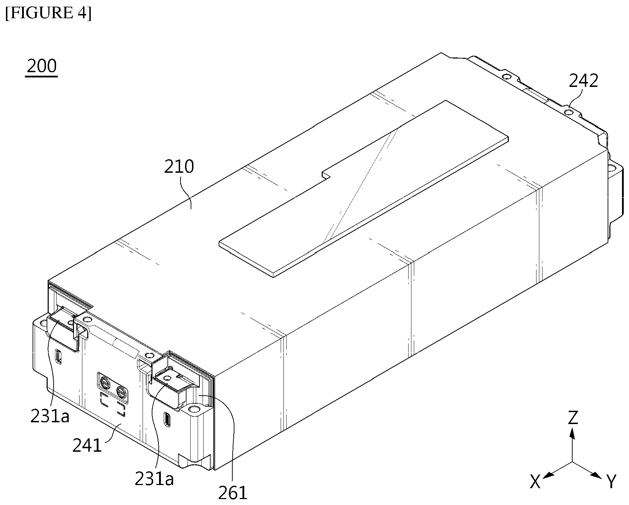

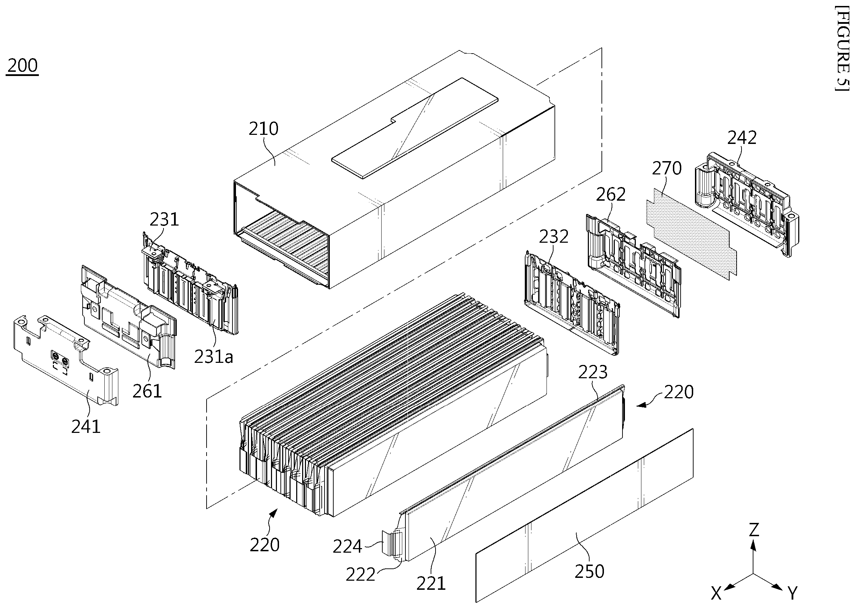

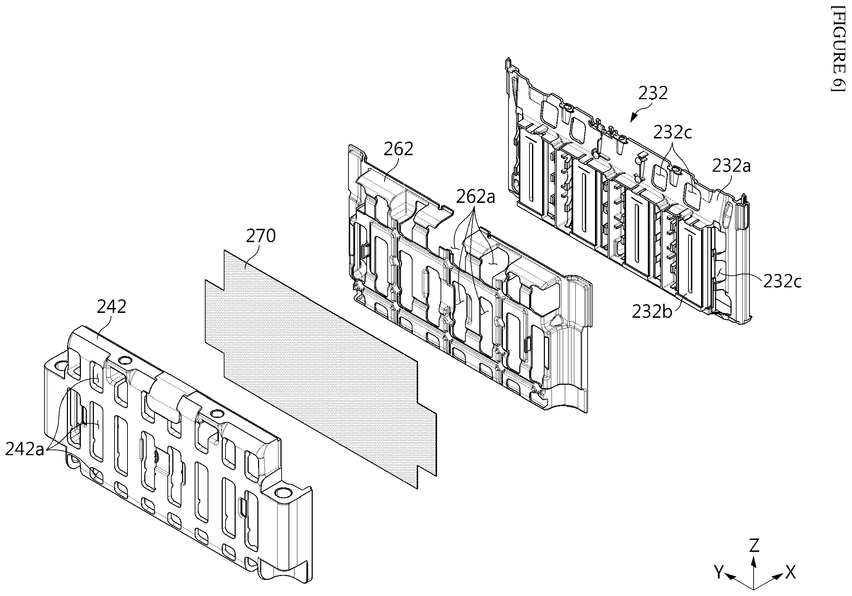

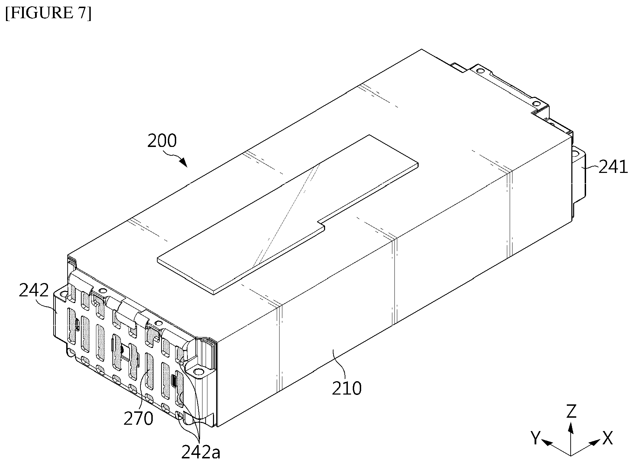

FIG. 4 is a drawing showing the battery module 200 of FIG. 3. FIG. 5 is a drawing showing some components of the battery module 200 of FIG. 4. FIG. 6 is a drawing showing some components of the battery module 200 of FIG. 5, viewed in a different direction. FIG. 7 is a drawing showing the battery module 200 of FIG. 4, viewed in a different direction.

Referring to FIGS. 4 to 7, the battery module 200 may include a module case 210, a plurality of battery cells 220, a pad 250, a front bus bar frame assembly 231, a rear bus bar frame assembly 232, a front insulation cover 261, a rear insulation cover 262, a front end cover 241, and a rear end cover 242.

The module case 210 may have a rectangular parallelepiped shape. The module case 210 may provide a space therein. The module case 210 may have a top plate, a bottom plate, and a pair of side plates. Also, the module case 210 may have open front and rear surfaces.

The battery cell 220 may be accommodated inside the module case 210. The battery cell 220 may be provided in plurality. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape.

The plurality of battery cells 220 may be stacked along the right and left direction or the Y-axis direction. The battery cell 220 may include an accommodation portion 221 having an electrode assembly, a first sealing portion 222 protruding to the front and rear sides of the accommodation portion 221, and a second sealing portion 223 protruding upward from the accommodation portion 221. In addition, the battery cell 220 may include an electrode lead 224 protruding to the front and rear sides of the first sealing portion 222, respectively. Each battery cell 220 may extend along the front and rear direction or the X-axis direction. The electrode lead 224 may protrude to the front and rear sides of each battery cell 220.

The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the right and left direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The front bus bar frame assembly 231 may be provided at the front side of the plurality of battery cells 220, respectively. The front bus bar frame assembly 231 may be electrically connected to the front electrode lead 224 of the plurality of battery cells 220.

The rear bus bar frame assembly 232 may be provided at the rear side of the plurality of battery cells 220, respectively. The rear bus bar frame assembly 232 may be electrically connected to the rear electrode lead 224 of the plurality of battery cells 220.

The front end cover 241 may be coupled to the front side of the module case 210. The front end cover 241 may cover the front surface of the module case 210. The front end cover 241 may have a square shape.

The rear end cover 242 may be coupled to the rear side of the module case 210. The rear end cover 242 may cover the rear surface of the module case 210. The rear end cover 242 may have a square shape.

The front insulation cover 261 may be located between the front end cover 241 and the front bus bar frame assembly 231. The front insulation cover 261 may electrically insulate the front bus bar frame assembly 231 and the front end cover 241.

The rear insulation cover 262 may be located between the rear end cover 242 and the rear bus bar frame assembly 232. The rear insulation cover 262 may electrically insulate the rear bus bar frame assembly 232 and the rear end cover 242.

The rear bus bar frame assembly 232 may include a frame 232a and a bus bar 232b. The bus bar 232b may be installed on the frame 232a. The bus bar 232b may be electrically connected to the rear electrode leads 224 of the plurality of battery cells 220. The bus bar 232b may be provided in plurality. The plurality of bus bars 232b may be arranged along the right and left direction or the Y-axis direction. In addition, the frame 232a may have a first venting hole 232c. The first venting hole 232c may be a through hole. The first venting hole 232c may face the first sealing portion 222 at the rear side of the battery cell 220. The first venting hole 232c may be provided in plurality. Some of the plurality of first venting holes 232c may be arranged between two adjacent bus bars 232b.

According to this configuration of the present disclosure, the venting gas G and particles P generated inside the battery module 200 may be discharged to the rear of the battery module 200 through the first venting hole 232c.

The battery module 200 may include a power terminal 231a that protrudes forward. The power terminal 231a may be provided on the front bus bar frame assembly 231. Also, the power terminal 231a may protrude from the front bus bar frame assembly 231. The power terminal 231a may be provided as a pair. The power terminal 231a may be exposed to the outside of the battery module 200.

In addition, the power terminal 231a may be electrically connected to the power terminal 231a of a neighboring battery module 200. An inter bus bar 600 (see FIGS. 2 and 3) may electrically connect neighboring battery modules 200.

According to this configuration of the present disclosure, the thermal safety of the battery pack 1000 may be improved. The front side of the battery module 200 may have major components such as the power terminal 231a, the control terminal, and the inter bus bar 600. By discharging the venting gas G and particles P to the rear side of the battery module 200, damage to the front side of the battery module 200 may be minimized. By minimizing damage to the front side of the battery module 200, propagation of a thermal event to neighboring battery modules 200 may be suppressed.

The rear insulation cover 262 of the battery pack 1000 according to an embodiment of the present disclosure may include a second venting hole 262a. The second venting hole 262a may be a through hole. The second venting hole 262a may face the rear bus bar frame assembly 232 or the first venting hole 232c. In addition, the second venting hole 262a may be in communication with the first venting hole 232c. The second venting hole 262a may be provided in plurality. The plurality of second venting holes 262a may be in communication with the plurality of first venting holes 232c.

The battery module 200 of the battery pack 1000 according to an embodiment of the present disclosure may further include a heatproof sheet 270. The heatproof sheet 270 may contain a material with high heat resistance or fire resistance. The heatproof sheet 270 may be located at the inner side of the rear end cover 242. In addition, the heatproof sheet 270 may be located between the rear end cover 242 and the rear insulation cover 262. In addition, the heatproof sheet 270 may be fixed between the rear end cover 242 and the rear insulation cover 262.

The heatproof sheet 270 may be located between the third venting hole 242a and the second venting hole 262a. The heatproof sheet 270 may cover a plurality of third venting holes 242a and a plurality of second venting holes 262a.

According to this configuration of the present disclosure, the thermal safety of the battery pack 1000 may be improved. When a thermal event occurs, the internal pressure of the module case 210 may increase due to the venting gas G and particles P. This may cause a portion of the heatproof sheet 270 to rupture. Also, due to the rupture of the heatproof sheet 270, some of the second venting holes 262a and some of the third venting holes 242a may be communicated, and the venting gas G and particles P may be discharged. In addition, the non-ruptured portion of the heatproof sheet 270 may still cover the remaining second venting holes 262a and the remaining third venting holes 242a. This may block the venting gas G and particles P discharged to the outside of the battery module 200 from flowing into the battery module 200.

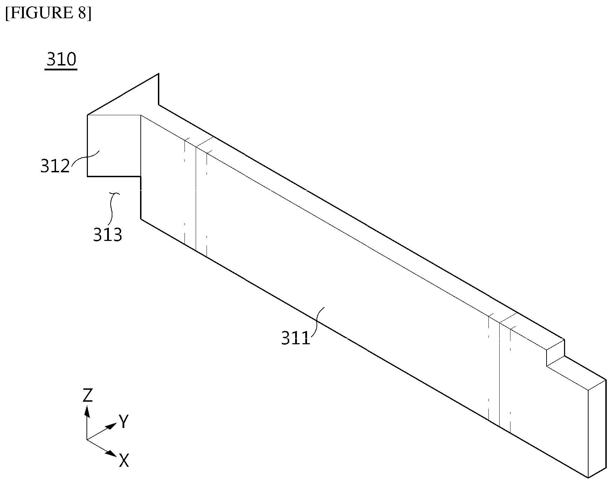

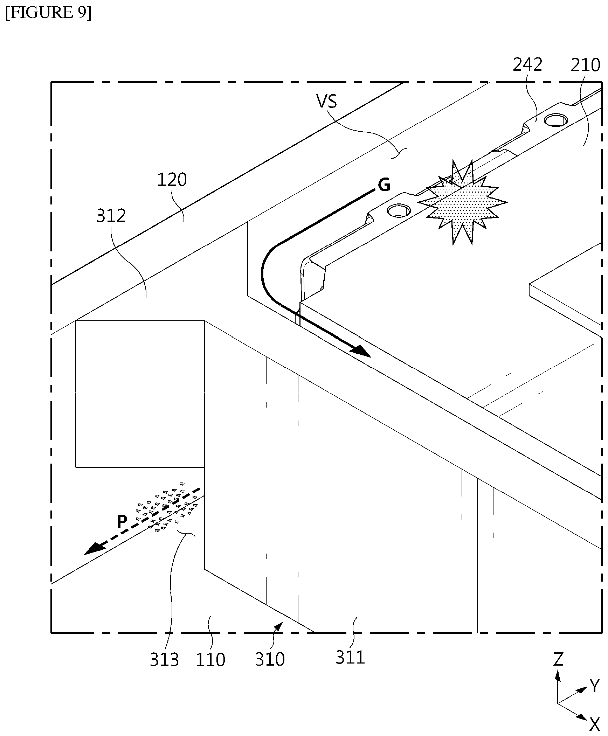

FIG. 8 is a drawing showing the first partition wall 310 of FIG. 3. FIG. 9 is a drawing showing some components of the battery pack 1000 of FIG. 2.

Referring to FIGS. 8 and 9, the first partition wall 310 may include a main wall 311. The main wall 311 may be installed, fastened, fixed, coupled, or attached to the upper surface of the base plate 110. The main wall 311 may extend long along the front and rear direction or the X-axis direction. The main wall 311 may cover one surface of the battery module 200. The main wall 311 may cover the left side or the right side of the battery module 200.

The battery module 200 may be spaced apart from the side wall 120. A gap may be formed between the battery module 200 and the side wall 120. The gap between the battery module 200 and the side wall 120 may be referred to as a venting space VS. The rear end cover 242 may be spaced apart from the side wall 120. The gap between the rear end cover 242 and the side wall 120 may be referred to as a venting space VS. The battery module 200 may discharge the venting gas G and particles P into the venting space VS.

The first partition wall 310 may have a passing hole 313. The passing hole 313 may be formed between the side wall 120 and the main wall 311. The passing hole 313 may face the gap formed between the rear end cover 242 and the side wall 120. The passing hole 313 may be in communication with the gap between the rear end cover 242 and the side wall 120. The passing hole 313 may face the venting space VS. The passing hole 313 may be in communication with the venting space VS.

When a thermal event occurs, a large quantity of particles P may be discharged. The large quantity of particles P discharged to the venting space VS may flow along the base plate 110 or the side wall 120 by gravity. The large quantity of particles P may flow along the venting space VS. The large quantity of particles P may flow through the passing hole 313. The large quantity of particles P may flow along the right and left direction or the Y-axis direction. If the flow of high-temperature particles P is blocked or the high-temperature particles P are stagnant, the thermal event may be propagated by the particles P. However, according to an embodiment of the present disclosure, the propagation of the thermal event caused by the particles P may be suppressed by dispersing or diffusing the high-temperature particles P.

The passing hole 313 may be opened downward or along the -Z-axis direction. The passing hole 313 may expose the base plate 110. According to this configuration of the present disclosure, a large quantity of particles P may easily flow. The passing hole 313 may minimize the flow resistance of the particles P.

The passing hole 313 may be opened rearward or along the -X-axis direction. The passing hole 313 may expose the side wall 120. According to this configuration of the present disclosure, a large quantity of particles P may easily flow. The passing hole 313 may minimize the flow resistance of the particles P.

The first partition wall 310 may include a flow guide 312. The flow guide 312 may extend rearward or in the -X-axis direction from the main wall 311. The flow guide 312 may extend between the rear end cover 242 and the side wall 120. The flow guide 312 may connect the side wall 120 and the main wall 311. The flow guide 312 may be in contact with, installed, fastened, fixed, coupled or attached to the side wall 120. The flow guide 312 may cover at least a part of the rear end cover 242.

When a thermal event occurs, the venting gas G may rise. The venting gas G discharged into the venting space VS may flow along the side wall 120. The venting gas G may flow along the venting space VS. The venting gas G may flow along the right and left direction or the Y-axis direction. If the flow of the high-temperature venting gas G is blocked or the high-temperature venting gas G is stagnant, the thermal event may be propagated by the venting gas G. However, according to an embodiment of the present disclosure, the high-temperature venting gas G may be dispersed or diffused into the inner space of the case 100 along the flow guide 312, thereby suppressing the propagation of the thermal event caused by the venting gas G.

The flow guide 312 may be disposed above the passing hole 313. When a thermal event occurs, the particles P may move downward by gravity, and the venting gas G may rise. Therefore, the passing hole 313, which diffuses or disperses the particles P, may be disposed below, and the flow guide 312, which diffuses or disperses the venting gas G, may be disposed above.

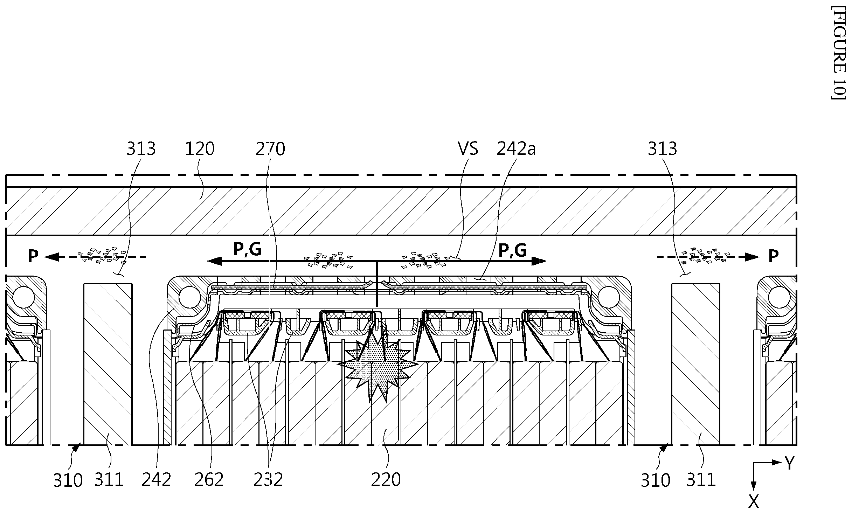

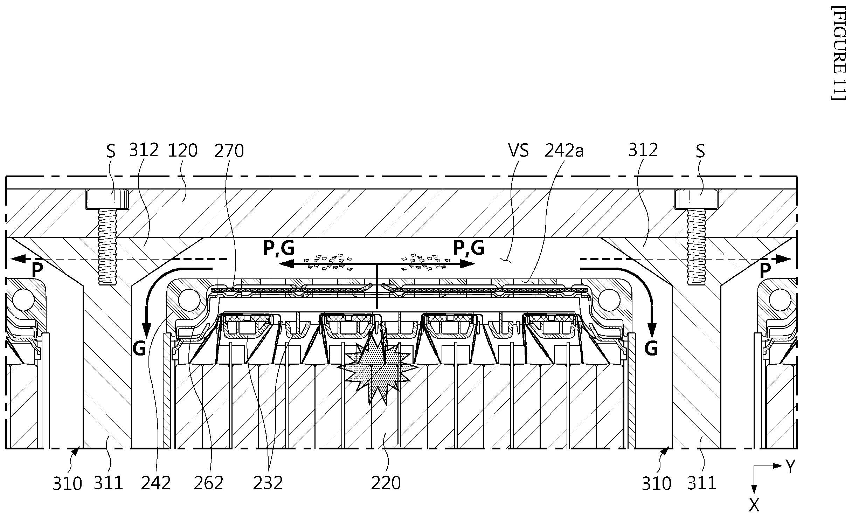

FIG. 10 is a cross-sectional view taken along the line A-A' of FIG. 1. FIG. 11 is a cross-sectional view taken along the line B-B' of FIG. 1.

Referring to FIGS. 10 and 11, when a thermal event occurs, the particles P may flow along the right and left direction or the Y-axis direction through the passing hole 313. The venting gas G may flow along the right and left direction or the Y-axis direction and then be dispersed or diffused along the forward or X-axis direction by the flow guide 312.

The flow guide 312 may connect the side wall 120 and the main wall 311 at an angle. The flow guide 312 may be arranged to be inclined with respect to the side wall 120. The flow guide 312 may be arranged to be inclined with respect to the main wall 311. The venting gas G may be distributed or diffused along the inclined surface formed by the flow guide 312.

The flow guide 312 may connect the side wall 120 and the main wall 311 with a curved surface. The venting gas G may be distributed or diffused along the curved surface formed by the flow guide 312.

The cross-section of the flow guide 312 perpendicular to the Z-axis may have an area that increases rearward or in the -X-axis direction. The width of the flow guide 312 in the right and left direction or the Y-axis direction may increase rearward or in the -X-axis direction.

The flow guide 312 may be installed, fastened, fixed or coupled to the side wall 120 by the fastening member S.

In addition, the battery pack 1000 according to the present disclosure may further include various components of the battery pack known at the time of filing of this application, such as a BMS, a bus bar, a relay, a current sensor, etc.

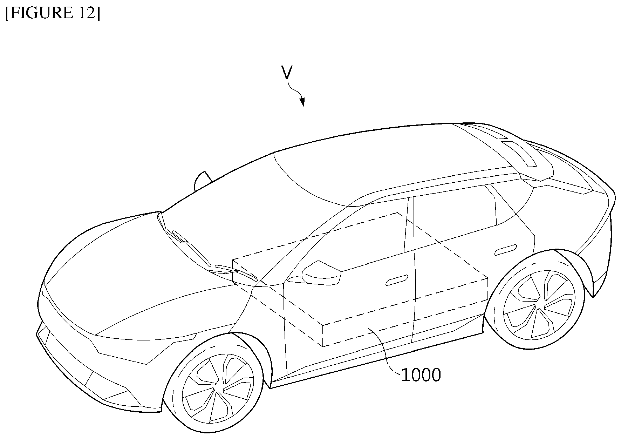

FIG. 12 is a drawing showing a vehicle V according to an embodiment of the present disclosure.

Referring to FIG. 12, the battery pack 1000 according to the present disclosure may be applied to a vehicle V, such as an electric vehicle or a hybrid electric vehicle. That is, the vehicle V according to the present disclosure may include the battery pack 1000 according to the present disclosure. Also, the vehicle V according to the present disclosure may further include various other components included in the vehicle in addition to the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case including a base plate and a side wall installed on the base plate;
a battery module located inside the case and including a rear end cover having a venting hole facing the side wall; and
a partition wall located inside the case and having a passing hole facing a gap between the rear end cover and the side wall.

2. The battery pack according to claim 1,
wherein the partition wall includes:
a main wall installed on the base plate and configured to cover one surface of the battery module; and
a flow guide extending between the rear end cover and the side wall from the main wall.

3. The battery pack according to claim 2,
wherein the flow guide is disposed above the passing hole.

4. The battery pack according to claim 2,
wherein the flow guide connects the side wall and the main wall at an angle.

5. The battery pack according to claim 2,
wherein the flow guide connects the side wall and the main wall with a curved surface.

6. The battery pack according to claim 2,
wherein the flow guide covers a part of the rear end cover.

7. The battery pack according to claim 2, further comprising:
a fastening member configured to fasten the flow guide and the side wall.

8. The battery pack according to claim 1,
wherein the passing hole is open downward.

9. The battery pack according to claim 1,
wherein the passing hole is open rearward.

10. The battery pack according to claim 1,
wherein the passing hole exposes the side wall or the base plate.

11. The battery pack according to claim 1,
wherein the battery module further includes a power terminal protruding forward.

12. A vehicle comprising the battery pack according to any one of claims 1 to 11.
